# EUROPÄISCHE PATENTSCHRIFT

(11) **EP 3 360 737 B1**
(45) Veröffentlichungstag und Bekanntmachung des Hinweises auf die Patenterteilung: **10.08.2022**
(21) Anmeldenummer: 18152935.5
(22) Anmeldetag: 23.01.2018
(51) Int. Cl.: B60T 7/08, B60T 13/26, B60T 13/66, B60T 17/22

(54) **VERFAHREN UND VORRICHTUNG ZUM STEUERN EINER ELEKTRISCHEN PARKBREMSE**
METHOD AND DEVICE FOR CONTROLLING AN ELECTRONIC PARKING BRAKE
PROCÉDÉ ET DISPOSITIF DE COMMANDE D'UN FREIN DE STATIONNEMENT ÉLECTRIQUE

(30) Priorität: 08.02.2017 DE 102017001140
(43) Veröffentlichungstag der Anmeldung: 15.08.2018
(73) Patentinhaber: MAN Truck & Bus SE, 80995 München (DE)
(72) Erfinder: Mohra, Holger, 80805 München (DE); Arnold, Claus, 93161 Sinzing (DE); Zademach, Martin, 85055 Ingolstadt (DE); Güllich, Johannes, 85229 Markt Indersdorf (DE)
(74) Vertreter: v. Bezold & Partner Patentanwälte - PartG mbB

(56) Entgegenhaltungen:
- EP-A1- 3 118 048
- EP-A2- 1 997 700
- DE-A1-102008 064 077
- DE-A1-102015 114 780

## Beschreibung

Die Erfindung betrifft ein Verfahren und eine Vorrichtung zum Steuern einer elektrischen Parkbremse eines Kraftfahrzeugs, insbesondere eines Nutzfahrzeugs und/oder Zugfahrzeugs.

Zur Erzeugung der notwendigen großen Bremskräfte sind Nutzfahrzeuge mit druckluftbetätigten Bremsen ausgerüstet. Die sogenannte Betriebsbremse wird dabei mit Druckluftzylindern, vorzugsweise in Form von Membranzylindern, betätigt. Die Feststellbremse hingegen kann nicht mit einem Druckluftzylinder betätigt werden, da Feststellbremsen nur mechanisch wirken dürfen, denn nur so ist eine konstante Bremskraft über einen praktisch unbegrenzten Zeitraum gewährleistet. Bei mit Druckluft beaufschlagten Bremsen könnte es durch Leckagen zu einem Abfall der Bremskraft kommen, so dass das Fahrzeug nur noch von der Feststellbremse, z. B. einer mechanischen Federspeicherbremse, gehalten wird.

Für die Parkbremse von Anhängerfahrzeugen ist in gewissen Ländern daher eine Anhängerkontrollfunktion (auch als Testfunktion bzw. Prüfstellung bezeichnet) gesetzlich vorgeschrieben, mit welcher der Fahrer prüfen kann, ob das Anhängerfahrzeug, bestehend aus Zugfahrzeug und Anhänger/Auflieger, alleine nur mit der mechanischen Feststellbremse des Zugfahrzeuges an einem Hang stehen bleibt.

Die Feststellbremse ist oftmals als rein pneumatisch betätigbare Federspeicherbremse ausgeführt, wobei jedoch bei modernen Anhängerfahrzeugen zunehmend elektrische Parkbremsen in Form von elektropneumatisch betätigbaren Federspeicherbremsen zum Einsatz kommen.

Für Anhängerfahrzeuge mit rein pneumatisch betätigbaren Federspeicherbremsen sind aus der Praxis Ansätze bekannt, dass das Handbedienelement zum Einlegen und Auslegen der Feststellbremse auch in eine Prüfstellung bringbar ist, um eine Anhängerkontrollfunktion zu aktivieren.

DE 10 2008 064 077 A1 beschreibt eine Betätigungseinrichtung sowie ein Verfahren zum Betätigen einer derartigen Betätigungseinrichtung für eine Parkbremse, wobei durch unterschiedliche Auslenkpositionen unterschiedliche Schaltzustände erreicht werden können, in welchen die Parkbremse u. a. gelöst, eingelegt oder die Anhängerkontrollfunktion aktiviert werden ist.

Die Betätigung des Handbedienelements (Handbremsventil) schaltet die Bremsanlage in die Feststellbremsstellung. Die Federspeicherbremszylinder werden entlüftet - die Druckkraft der Federn im Federspeicherteil wirkt auf die Radbremsen der Hinterachse des Zugfahrzeugs. Die Radbremsen des Anhängers bzw. Sattelaufliegers bleiben belüftet, also eingebremst.

Mit Hilfe der Prüfstellung werden bei eingelegter Feststellbremse des Zugfahrzeugs die Bremsen des Anhängers gelöst, indem die Steuerleitung zum Anhängerbremsventil entlüftet wird, das Zugfahrzeug wird jedoch weiterhin von der eingelegten Feststellbremse des Zugfahrzeugs gehalten. Mit dieser Prüfstellung kann der Fahrer insbesondere beim Parken am Hang prüfen, ob das Anhängerfahrzeug, bestehend aus Zugfahrzeug und Anhänger/Auflieger, alleine nur mit der mechanischen Feststellbremse des Zugfahrzeuges an einem Hang stehen bleibt oder sich in Bewegung setzt. Hat das Fahrzeug eine pneumatische Vorderachs-Feststellbremse, ist die Prüfung auch beim Solofahrzeug durchzuführen.

Die aus der Praxis bekannten Ansätze zur Einstellung der Anhängerkontrollfunktion erfordern teils komplizierte Bedienungsabläufe am Bedienelement. Ferner sind diese Ansätze und Bedienlogiken nicht ohne Weiteres auf elektropneumatische Feststellbremsen übertragbar, da das Bedienelement ein elektrisches Steuersignal auslöst und kein mechanisches Schließen oder Öffnen eines Ventils zum Entlüften (Einlegen) oder zum Beaufschlagen mit Druck (Ausschalten bzw. Öffnen) einer herkömmlichen rein pneumatisch betätigbaren Feststellbremse.

Aus der Patentschrift DE 10 2007 033 694 B3 ist ein Ansatz bekannt, bei dem zur Realisierung einer Anhängerkontrollfunktion beim Betätigen des Bedienorgans für die Parkbremsstellung zuerst nur die Federspeicherbremse des Zugfahrzeugs aktiviert wird und anschließend zeitverzögert der Anhänger gebremst wird. Ist die Bremskraft der Federspeicherbremse nicht ausreichend, das Anhängerfahrzeug zu halten, so rollt das Fahrzeug in der Zwischenzeit vor dem zeitverzögerten Aktivieren der Anhängerbremse fort, und der Fahrer merkt diesen Zustand. Somit wird die Testfunktion zwar automatisch ohne unmittelbares Zutun des Fahrers durchgeführt, jedoch wird dem Fahrer die Anhängerkontrollfunktion aufgezwungen, d. h., er kann nicht wählen, ob er diese durchführen möchte oder nicht. Dies kann bei unvorbereiteten Fahrern dazu führen, dass der Fahrer von einem kurzzeitig losrollenden Fahrzeug aufgrund der gelösten Anhängebremse überrascht wird. Ein weiterer Nachteil ist, dass die Anhängerkontrollfunktion nicht nur beim Parken in Hanglagen, sondern bei jedem Abstellen des Kraftfahrzeugs durchgeführt wird, obwohl dies gar nicht notwendig wäre.

Es ist somit eine Aufgabe der Erfindung, ein Verfahren zum Steuern einer elektrischen Parkbremse eines Kraftfahrzeugs, insbesondere eines Zugfahrzeugs, bereitzustellen, mit dem Nachteile herkömmlicher Verfahren vermieden werden können. Es ist insbesondere eine Aufgabe der Erfindung, ein Verfahren zum Steuern einer elektrischen Parkbremse eines Kraftfahrzeugs bereitzustellen, das einem Nutzer eine einfache Bedienlogik bietet, mit der die Anhängerkontrollfunktion mit Sicherheit durchgeführt werden kann. Es ist eine weitere Aufgabe der Erfindung, eine Vorrichtung zum Steuern einer elektrischen Parkbremse eines Kraftfahrzeugs, insbesondere eines Zugfahrzeugs, bereitzustellen, mit dem Nachteile herkömmlicher Vorrichtungen vermieden werden können.

Diese Aufgaben werden durch Verfahren und Vorrichtungen mit den Merkmalen der unabhängigen Ansprüche gelöst. Vorteilhafte Ausführungsformen und Anwendungen der Erfindung ergeben sich aus den abhängigen Ansprüchen und werden in der folgenden Beschreibung unter teilweiser Bezugnahme auf die Figuren näher erläutert.

Gemäß einem ersten Gesichtspunkt der Erfindung wird ein Verfahren zum Steuern einer elektrischen Parkbremse eines Kraftfahrzeugs bereitgestellt. Das Kraftfahrzeug kann ein Nutzfahrzeug sein, beispielsweise ein LKW oder ein Omnibus. Das Kraftfahrzeug kann ein Zugfahrzeug oder Anhängerfahrzeug sein. Das Zugfahrzeug ist das ziehende Fahrzeug in einem Anhängerfahrzeug, bestehend aus Zugfahrzeug und Anhänger bzw. Auflieger. Die elektrische Parkbremse wird auch als elektrische Feststellbremse (engl. electric parking brake oder electronic parking brake (EPB)) bezeichnet.

Das Kraftfahrzeug weist eine Handbetätigungseinrichtung zur Aktivierung, d. h. Einlegen, und Deaktivierung, d. h. Ausschalten, der elektrischen Parkbremse auf. Die Handbetätigungseinrichtung umfasst ein Bedienelement, das in eine erste und in eine zweite Betätigungsrichtung, z. B. erste und zweite Auslenkposition, bewegbar ist. Es werden Bedienvorgänge des Bedienelements erfasst und Steuersignale zur Steuerung der elektrischen Parkbremse in Abhängigkeit von einem erfassten Bedienvorgang ausgegeben. Hierbei wird bei Erfassung eines Bedienvorgangs des Bedienelements in die erste Betätigungsrichtung bei nicht-aktivierter Parkbremse ein Steuerungssignal zur Aktivierung der Parkbremse ausgegeben. Ferner wird bei Erfassung eines Bedienvorgangs des Bedienelements in die zweite Betätigungsrichtung, die vorzugsweise entgegengesetzt zur ersten Betätigungseinrichtung ist, ein Steuerungssignal zur Deaktivierung der Parkbremse ausgegeben.

Ferner wird bei Erfassung eines Bedienvorgangs des Bedienelements in die erste Betätigungsrichtung bei aktivierter Parkbremse ein Steuersignal zur Durchführung einer Anhängerkontrollfunktion ausgegeben. Mit anderen Worten wird die Anhängerkontrollfunktion, d. h. die Anhängerprüfstellung, aktiv, wenn das Bedienelement nach Einlegen der Parkbremse ein zweites Mal in die erste Betätigungsrichtung betätigt wird. Ein besonderer Vorzug liegt darin, dass das Aktivieren und die Deaktivierung der elektrischen Parkbremse und das Durchführen der Anhängerkontrollfunktion mit nur einem Bedienelement und nur zwei Betätigungsrichtungen (Auslenkpositionen) ermöglicht werden und so eine besonders einfache Bedienlogik für den Fahrer bereitgestellt wird.

Vorstehend wurde bereits festgestellt, dass unter einer Anhängerkontrollfunktion eine Testfunktion bzw. Prüfstellung der Parkbremse bezeichnet wird, mit der geprüft werden kann, ob das Kraftfahrzeug, insbesondere das Anhängerfahrzeug, alleine nur mit der mechanischen Feststellbremse des Zugfahrzeuges gehalten werden kann. Bei aktivierter Anhängerkontrollfunktion werden daher in der Regel bei eingelegter Feststellbremse des Zugfahrzeugs die Feststellbremsen des Anhängers kurzzeitig gelöst, um zu prüfen, ob insbesondere beim Parken am Hang das Anhängerfahrzeug, bestehend aus Zugfahrzeug und Anhänger/Auflieger, alleine nur mit der mechanischen Feststellbremse des Zugfahrzeuges stehen bleibt oder sich in Bewegung setzt.

Gemäß einer besonders bevorzugten Ausführungsform ist das Bedienelement als schwenkbar gelagertes Bedienelement, insbesondere als schwenkbar gelagerter Bedienhebel, ausgeführt. Der Bedienhebel kann in einer Hebelschale schwenkbar gelagert sein, die vorzugsweise an einer Instrumententafel des Zugfahrzeugs angeordnet ist. Eine Ausführung des Bedienelements als Bedienhebel zur Betätigung einer elektrischen Parkbremse, bei der eine Ausführung als Bedienhebel nicht erforderlich bzw. ungewöhnlich ist, ist vorliegend besonders vorteilhaft, da für den Fahrer diese Form des Bedienelements in Zusammenhang mit der Betätigung von rein pneumatisch betätigbaren Feststellbremsen bereits vertraut ist und der Fahrer somit keine neue Bedientechnik erlernen muss. Es wird somit eine Adaption einer bekannten Funktionalität bei pneumatischen Parkbremsen auf die Randbedingung der Bedienung einer elektrischen Parkbremse bereitgestellt.

Eine vorteilhafte Variante dieser Ausführungsform sieht vor, dass ein Ziehen des Bedienhebels, insbesondere ein Ziehen aus einer Neutralstellung, einem Bedienvorgang in die erste Betätigungsrichtung entspricht und ein Drücken des Bedienhebels, insbesondere ein Druck aus der Neutralstellung, einem Bedienvorgang in die zweite Betätigungsrichtung entspricht. Zur Aktivierung der Parkbremse und zur Durchführung der Anhängerkontrollfunktion muss der Bedienhebel somit nur gezogen und nicht umständlich in verschiedene Richtungen bewegt werden.

Hierbei kann das Steuerungssignal zur Aktivierung der Parkbremse bei Erfassung eines Ziehens und nachfolgenden Loslassens des Bedienhebels ausgegeben werden. Zur nachfolgenden Durchführung der Anhängerkontrollfunktion sind zwei unterschiedliche Varianten denkbar: Eine erste Variante sieht vor, dass das Steuersignal zur Durchführung der Anhängerkontrollfunktion bei Erfassung eines Ziehens und Haltens des ausgezogenen Bedienhebels bei aktiviertem Zustand der Parkbremse ausgegeben wird. Mit anderen Worten wird durch ein erstmaliges Ziehen und wieder Loslassen des Bedienhebels die elektrische Parkbremse aktiviert. Wenn anschließend der Bedienhebel ein zweites Mal gezogen und gehalten wird, wird die Anhängerprüfstellung aktiv. Es wurde festgestellt, dass diese Bedienlogik für den Nutzer besonders intuitiv ist, da zwei ähnliche (gleiche Betätigungsrichtung), jedoch klar unterscheidbare (Loslassen vs. Halten des Bedienhebels) Bedienvorgänge zum Einlegen der Parkbremse und zum Einlegen der Anhängerprüfstellung bereitgestellt werden.

Eine zweite Variante sieht dagegen vor, dass das Steuersignal zur Durchführung der Anhängerkontrollfunktion bei Erfassung eines Ziehens und nachfolgenden Loslassens des Bedienhebels bei aktiviertem Zustand der Parkbremse ausgegeben wird. Mit anderen Worten wird durch ein erstmaliges Ziehen und wieder Loslassen des Bedienhebels die elektrische Parkbremse aktiviert. Wenn anschließend der Bedienhebel ein zweites Mal gezogen und wieder losgelassen wird, wird die Anhängerprüfstellung aktiv. Bei dieser Variante wird vorzugsweise eine Rückmeldung auf der Instrumententafel, beispielsweise auf einem Bildschirm des Kombiinstruments, angezeigt, die dem Fahrer anzeigt, ob der Bedienvorgang die Parkbremse aktiviert hat oder die Durchführung der Anhängerkontrollfunktion eingeleitet hat.

Gemäß einem weiteren Aspekt erfolgt bei Bedarf automatisch eine Aufforderung an den Fahrer zur Durchführung der Anhängerkontrollfunktion. Erfindungsgemäß ist vorgesehen, dass bei Aktivierung der Parkbremse automatisch geprüft wird, ob eine vorbestimmte Prüfbedingung erfüllt ist. Diese Prüfbedingung wird nachfolgend als Anhängerkontrollfunktion-Prüfbedingung bezeichnet. Bei Erfüllung der Anhängerkontrollfunktion-Prüfbedingung wird eine Rückmeldung an den Fahrer ausgegeben, die den Fahrer an die Durchführung der Anhängerkontrollfunktion erinnert. Auf diese Weise kann verhindert werden, dass der Fahrer vergisst, die Anhängerkontrollfunktion durchzuführen.

Beispielsweise kann die Anhängerkontrollfunktion-Prüfbedingung erfüllt sein, falls zumindest eine der folgenden Bedingungen vorliegt: Das Zugfahrzeug befindet sich auf einer Steigung oder einer Gefällestrecke, ein Fahrzeuggewicht überschreitet einen vorbestimmten Gewichtsschwellenwert, das Zugfahrzeug ist mit einem Anhänger und/oder Sattelauflieger verbunden. Ferner kann die Rückmeldung eine Hinweismeldung, die auf einem Anzeigebildschirm eines Kombiinstruments des Zugfahrzeugs angezeigt wird, ein akustisches Signal und/oder ein haptisches Signal umfassen.

Gemäß einem weiteren Aspekt kann das Bedienelement so ausgeführt sein, dass es bei Auslenkung in die erste Betätigungsrichtung einen Kraft-Weg-Verlauf mit zunehmender Kraft über den ausgelenkten Weg und/oder mit einem haptisch fühlbaren Druckpunkt aufweist, wobei das Steuerungssignal zur Aktivierung der Parkbremse und das Steuersignal zur Durchführung der Anhängerkontrollfunktion nur ausgegeben werden, wenn der haptisch fühlbare Druckpunkt bei Auslenkung in die erste Betätigungseinrichtung überschritten ist. Bei Ausführung des Bedienelements als Bedienhebel kann beispielsweise durch ein Ziehen des Hebels über den Druckpunkt im Stillstand die Parkbremse eingelegt werden und durch ein nochmaliges Betätigen des Bedienhebels über den Druckpunkt im Stillstand die Anhängerprüfstellung ausgelöst werden bzw. der Anhängerbremsdruck temporär gelöst werden.

Diese Ausführung mit Druckpunkt bietet einerseits den Vorteil, dass dem Nutzer ein haptisches Feedback bereitgestellt wird, das dem Nutzer anzeigt, bei welcher Auslenkposition die Parkbremse bzw. die Anhängerkontrollfunktion aktiviert wird. Ein weiterer Vorteil ist, dass die Feststellbremse während der Fahrt als Hilfsbremse eingesetzt werden kann, indem die Federspeicherbremszylinder mithilfe des über unterschiedliche Bedienwege dosiert bedienbaren Bedienelements unterschiedlich stark entlüftet (0 - 100 %) werden.

Gemäß einem weiteren Aspekt ist es vorteilhaft, eine visuelle und/oder eine akustische Hinweismeldung bei oder nach Durchführung der Anhängerkontrollfunktion auszugeben, wobei die Hinweismeldung dem Fahrer einen Hinweis darauf gibt, ob er das Zugfahrzeug umparken sollte oder sicher gebremst stehen lassen kann. Mit anderen Worten wird dem Fahrer das Ergebnis der Anhängerkontrollfunktion mitgeteilt. Die Rückmeldung der Anhängerkontrollfunktion erfolgt somit nicht nur wie bisher durch die Feststellung des Fahrers, dass das Fahrzeug zu rollen beginnt, sondern als klar verständlicher Hinweis, vorzugsweise als Anzeige im Kombiinstrument.

Gemäß einem weiteren Aspekt kann erneut ein Warnton und/oder ein Warnhinweis ausgegeben werden, wenn ein Fahrer trotz der ausgegebenen Hinweismeldung, die den Fahrer darauf hingewiesen hat, dass als Ergebnis der Anhängerkontrollfunktion das Fahrzeug umgeparkt werden sollte, das Fahrerhaus verlässt, ohne das Fahrzeug umzuparken.

Eine weitere Möglichkeit der erfindungsgemäßen Realisierung sieht vor, dass ein Prüfergebnis der Anhängerkontrollfunktion automatisch ermittelt wird, insbesondere durch sensorisches Erfassen eines Losrollens und/oder einer Rollbewegung des Zugfahrzeugs bei Durchführung der Anhängerkontrollfunktion. Dies kann beispielsweise mit einem üblichen Raddrehzahlsensor erfolgen, der schon kleinste Bewegungen des Rades in der Anhängerprüfstellung detektieren kann. Bei einer manuellen Prüfung durch den Fahrer sind größere Rollbewegungen des Fahrzeugs erforderlich, die so vermieden werden können.

Die elektrische Parkbremse ist vorzugsweise als eine elektropneumatisch betätigbare Feststellbremse, insbesondere als eine elektropneumatisch betätigbare Federspeicherbremseinrichtung ausgeführt. Hierbei kann die elektropneumatisch betätigbare Federspeicherbremse ein Parkbremsventil zur Ansteuerung mindestens einer Federspeicherbremse des Zugfahrzeugs und ein Anhängerbremsventil zur Druckbeaufschlagung einer Anhängersteuerleitung aufweisen.

Gemäß einem weiteren Aspekt wird bei Aktivierung der Parkbremse sowohl die Parkbremse des Zugfahrzeugs als auch die Parkbremse eines mit dem Zugfahrzeugs verbundenen Anhängers aktiviert. Ferner kann zur Durchführung der Anhängerkontrollfunktion die Parkbremse des Zugfahrzeugs aktiviert bleiben, während die Parkbremse des Anhängers temporär deaktiviert wird.

Gemäß einem zweiten allgemeinen Gesichtspunkt der Erfindung wird eine Vorrichtung zum Steuern einer elektrischen Parkbremse eines Zugfahrzeugs bereitgestellt. Die Vorrichtung ist insbesondere ausgeführt, das Verfahren wie vorstehend beschrieben auszuführen. Hierzu umfasst die Vorrichtung eine Handbetätigungseinrichtung, wobei die Handbetätigungseinrichtung ein Bedienelement aufweist, das in eine erste und in eine zweite Betätigungsrichtung bewegbar ist. Die Vorrichtung umfasst ferner eine Steuerungseinrichtung, die ausgeführt ist, Bedienvorgänge des Bedienelements zu erfassen und in Abhängigkeit von dem erfassten Bedienvorgang ein Steuersignal zur Steuerung der elektrischen Parkbremse auszugeben. Hierbei gibt die Steuerungseinrichtung bei Erfassung eines Bedienvorgangs des Bedienelements a) in die erste Betätigungsrichtung bei nicht-aktivierter Parkbremse ein Steuerungssignal zur Aktivierung der Parkbremse aus und b) in die zweite Betätigungsrichtung ein Steuerungssignal zur Deaktivierung der Parkbremse aus und in die erste Betätigungseinrichtung bei aktivierter Parkbremse ein Steuersignal zur Durchführung einer Anhängerkontrollfunktion aus.

Gemäß einem zweiten Aspekt der Vorrichtung kann das Bedienelement als Bedienhebel ausgeführt sein, der in einer Hebelschale schwenkbar gelagert ist und vorzugsweise an einer Instrumententafel des Zugfahrzeugs angeordnet ist. Gemäß einem dritten Aspekt der Vorrichtung kann ein Ziehen des Bedienhebels einem Bedienvorgang in die erste Betätigungsrichtung und ein Drücken des Bedienhebels einem Bedienvorgang in die zweite Betätigungsrichtung entsprechen.

Gemäß einem vierten Aspekt der Vorrichtung kann die Steuerungseinrichtung ausgeführt sein, bei Erfassung a) eines Ziehens und nachfolgenden Loslassens des Bedienhebels ein Steuerungssignal zur Aktivierung der Parkbremse auszugeben und b1) bei Erfassung eines Ziehens und Haltens des Bedienhebel bei aktiviertem Zustand der Parkbremse ein Steuersignal zur Durchführung einer Anhängerkontrollfunktion auszugeben oder b2) bei Erfassung eines Ziehens und nachfolgenden Loslassens des Bedienhebel bei aktiviertem Zustand der Parkbremse ein Steuersignal zur Durchführung einer Anhängerkontrollfunktion auszugeben.

Erfindungsgemäß ist die Steuereinrichtung ausgeführt, bei Aktivierung der Parkbremse zu prüfen, ob eine vorbestimmte Prüfbedingung erfüllt ist, und bei Erfüllung der Prüfbedingung ein Steuersignal zur Ausgabe einer Rückmeldung an den Fahrer zu geben, die den Fahrer an die Durchführung der Anhängerkontrollfunktion erinnert.

Gemäß einem sechsten Aspekt der Vorrichtung kann die Rückmeldung eine Hinweismeldung, die auf einem Anzeigebildschirm eines Kombiinstruments des Zugfahrzeugs angezeigt wird, ein akustisches Signal und/oder ein haptisches Signal umfassen.

Gemäß einem siebten Aspekt der Vorrichtung kann die Prüfbedingung erfüllt sein, falls zumindest eine der folgenden Bedingungen vorliegen: Das Zugfahrzeug befindet sich auf einer Steigung oder einer Gefällestrecke, ein Fahrzeuggewicht überschreitet einen vorbestimmten Gewichtsschwellenwert, das Zugfahrzeug ist mit einem Anhänger und/oder Sattelauflieger verbunden.

Gemäß einem achten Aspekt der Vorrichtung kann die Steuereinrichtung ausgeführt sein, bei oder nach Durchführung der Anhängerkontrollfunktion eine visuelle und/oder akustische Hinweismeldung auszugeben, die dem Fahrer einen Hinweis darauf gibt, ob er das Zugfahrzeug umparken sollte oder sicher gebremst stehen lassen kann. Gemäß einem neunten Aspekt der Vorrichtung kann die Steuereinrichtung ausgeführt sein, ein Prüfergebnis der Anhängerkontrollfunktion zu ermitteln, insbesondere durch Erfassen eines Losrollens und/oder einer Rollbewegung des Zugfahrzeugs bei Durchführung der Anhängerkontrollfunktion. Gemäß einem weiteren Aspekt der Vorrichtung kann das Steuersignal zur Aktivierung der Parkbremse bei einem am Zugfahrzeug angeschlossenen Anhänger sowohl die Parkbremse des Zugfahrzeugs als auch die Parkbremse des Anhängers aktivieren. Das Steuersignal zur Durchführung der Anhängerkontrollfunktion kann bewirken, dass die Parkbremse des Zugfahrzeugs aktiviert bleibt und eine Parkbremse des Anhängers temporär deaktiviert wird oder dass alle Bremseinrichtungen, die rein pneumatisch wirken, d. h. die bei Druckbeaufschlagung "eingelegt" sind, temporär entlüftet (geöffnet) werden und nur noch die Bremskraft der mechanisch wirkenden Bremseinrichtungen (z. B. über die Druckkraft der Federn im Federspeicherteil) aktiv bleibt.

Die Erfindung betrifft ferner ein Zugfahrzeug, insbesondere ein derartiges Nutzfahrzeug, mit einer Vorrichtung zum Steuern einer elektrischen Parkbremse wie in diesem Dokument beschrieben.

Die zuvor beschriebenen bevorzugten Ausführungsformen und Merkmale der Erfindung sind beliebig miteinander kombinierbar. Verfahrensgemäß offenbarte Aspekte sollen auch als vorrichtungsgemäß offenbart gelten und umgekehrt. Weitere Einzelheiten und Vorteile der Erfindung werden im Folgenden unter Bezug auf die beigefügten Zeichnungen beschrieben. Es zeigen:
- Figur 1: eine schematische Darstellung einer Vorrichtung zum Steuern einer elektrischen Parkbremse eines Zugfahrzeugs gemäß einem Ausführungsbeispiel;
- Figur 2: eine Hinweismeldung gemäß einem Ausführungsbeispiel der Erfindung;
- Figur 3: einen Bedienvorgang einer Handbetätigungseinrichtung gemäß einem Ausführungsbeispiel;
- Figur 4: während und nach der Durchführung der Anhängerkontrollfunktion anzeigbare visuelle und akustische Hinweismeldungen gemäß einem Ausführungsbeispiel; und
- Figur 5: während und nach der Durchführung der Anhängerkontrollfunktion anzeigbare visuelle und akustische Hinweismeldungen gemäß einem weiteren Ausführungsbeispiel.

Gleiche oder funktional äquivalente Elemente sind in allen Figuren mit denselben Bezugszeichen bezeichnet und werden zum Teil nicht gesondert beschrieben.

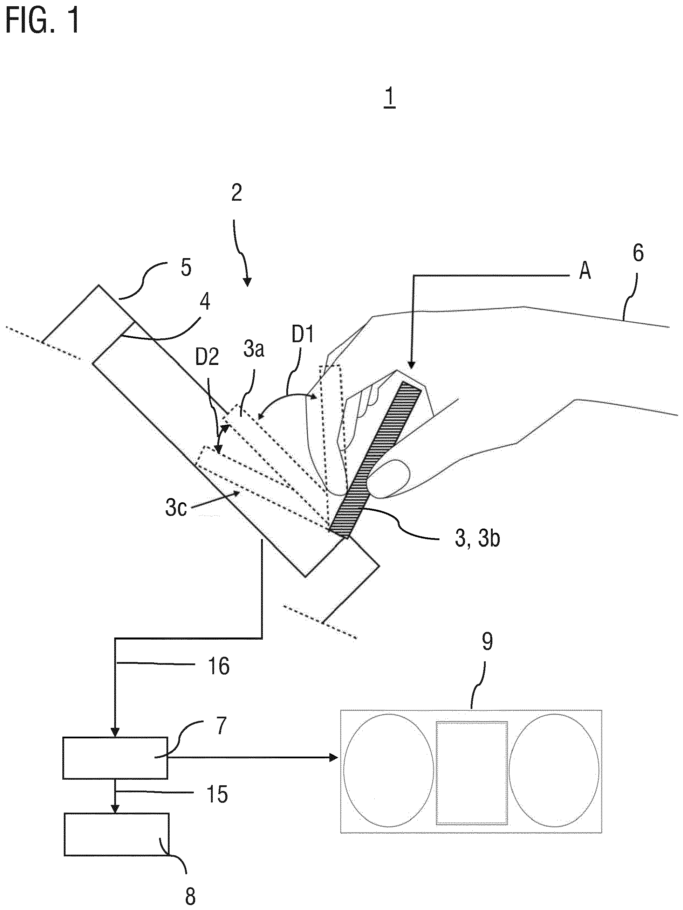

Figur 1 zeigt eine schematische Darstellung einer Vorrichtung 1 zum Steuern einer elektrischen Parkbremse eines Nutzfahrzeugs, das mit einem Anhänger/Auflieger koppelbar ist.

Die Vorrichtung 1 umfasst eine in der Instrumententafel 5 des Nutzfahrzeugs angeordnete Handbetätigungseinrichtung 2 mit einem Bedienhebel 3, der in einer Hebelschale 4, insbesondere einer Griffschale, schwenkbar gelagert ist. Der Bedienhebel ist von einem Nutzer 6 in verschieden Auslenkpositionen bewegbar. Die Bezugszeichen 3a, 3b und 3c bezeichnen den Bedienhebel in unterschiedlichen Bedienpositionen, d. h. Auslenkpositionen.

Die Vorrichtung umfasst ferner eine Steuerungseinrichtung 7, die z. B. als Teil eines Steuergeräts ausgeführt sein kann oder in die Handbetätigungseinrichtung 2 integriert sein kann. Die Steuerungseinrichtung 7 ist über eine elektrische Signalleitung 16 mit der Handbetätigungseinrichtung 2 verbunden und ausgeführt, Bedienvorgänge des Bedienhebels 3 zu erfassen, insbesondere in welche Auslenkposition der Bedienhebel bewegt wird. In Abhängigkeit von dem erfassten Bedienvorgang erzeugt die Steuerungseinrichtung 7 ein Steuersignal über eine elektrische Signalleitung 15 zur Steuerung einer elektrischen Parkbremse 8. Die Steuereinrichtung 7 steht ferner in Kommunikationsverbindung mit einem Kombiinstrument 9 des Nutzfahrzeugs. Das Kombiinstrument 9 ist vorzugsweise als digitales (virtuelles) Cockpit bzw. als frei programmierbares Kombiinstrument (FPK) ausgeführt. Die Steuereinrichtung 7 kann eine wiedergebende Anzeige auf dem Kombiinstrument ausgeben oder akustische Signale ausgeben lassen.

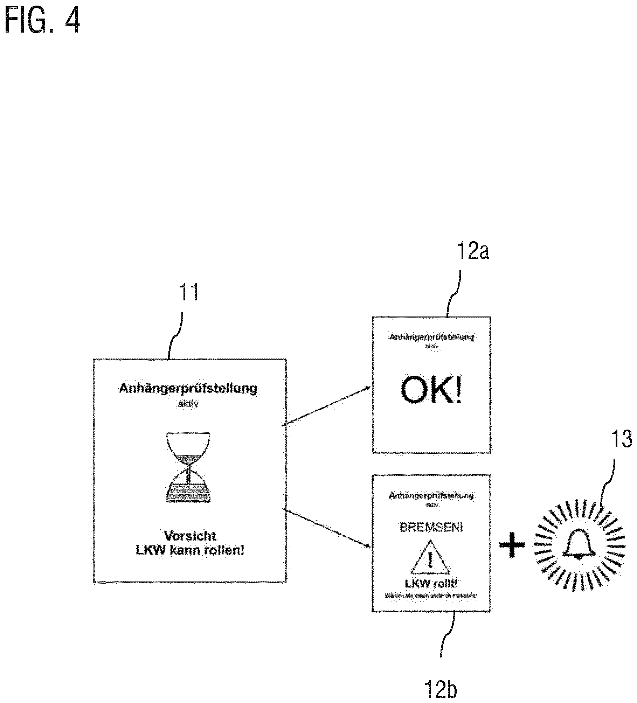

Die Figuren 1 bis 5 illustrieren ferner ein Verfahren zum Steuern der elektrischen Parkbremse 8.

Die Bremse 8 wird aktiviert, indem der Bedienhebel 3 aus der Neutralstellung 3a einmal gezogen wird, z. B. in die Stellung 3b, und anschließend losgelassen wird, so dass sich der Bedienhebel aufgrund einer Rückstellkraft, z. B. federbedingt, von alleine in die Neutralstellung 3a zurückbeweg. Die Bremse 8 wird deaktiviert, indem der Bedienhebel 3 gedrückt wird, z. B. in die Stellung 3c. Die jeweilige Bedienstellung wird von der Steuereinrichtung 7 über die Signalleitung 16 erfasst und ein entsprechendes Steuersignal 16 an die Parkbremse 8 ausgegeben. Bei angeschlossenem Anhänger werden hierbei sowohl die Feststellbremse des Zugfahrzeugs als auch des Anhängers eingelegt. Die Ziehbewegung ist mit dem Bezugszeichen A bezeichnet.

Hierbei ist es vorteilhaft, wenn die Hebelbewegung von der Neutralposition in die Stellung 3b einen charakteristischen Kraft-Weg-Verlauf aufweist, mit zunehmender Kraft über den Weg, der im Punkt 3b in einem Peak/ haptischer Druckpunkt endet. Die Parkbremse ist erst eingelegt, wenn der haptisch fühlbare Druckpunkt überschritten ist. Zuvor kann die Feststellbremse während der Fahrt als Hilfsbremse eingesetzt werden, indem die Federspeicherbremszylinder mithilfe des über unterschiedliche Bedienwege dosiert bedienbaren Bedienhebels unterschiedlich stark entlüftet (0 - 100 %) werden. Analoges trifft für die Aktivierung der Anhängerprüfstellung zu, die erst ausgelöst wird, wenn der Druckpunkt überschritten wird._{[c1]}

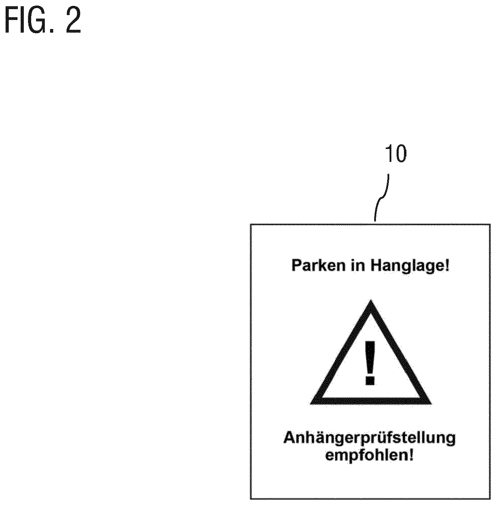

Beim Parken des Fahrzeugs mit Anhänger an einem Hang kann dem Fahrer optional anhand einer Anzeige signalisiert werden, dass er die Anhängerprüfstellung durchführen sollte. Hierbei kann von der Steuereinrichtung 7 geprüft werden, ob eine vorbestimmte Anhängerkontrollfunktion-Prüfbedingung erfüllt ist, und bei Erfüllung der Anhängerkontrollfunktion-Prüfbedingung eine Rückmeldung an den Fahrer ausgegeben werden, die den Fahrer an die Durchführung der Anhängerkontrollfunktion erinnert. Die Anhängerkontrollfunktion-Prüfbedingung kann beispielsweise erfüllt sein, wenn festgestellt wird, dass das Zugfahrzeug an einer Steigungs- oder einer Gefällestrecke geparkt ist. Der Fahrer muss damit rechnen, dass das Anhängerfahrzeug auf Dauer nicht sicher steht, z. B. falls der Bremsdruck zu gering wird und sich daher die Bremsen während der Prüfung lösen. Über diesen Umstand wird der Fahrer über die Anzeige 10 im Kombiinstrument informiert und/oder über eine Anzeige in einem Head-Up-Display, im Infotainment-Display oder mittels einer Applikationssoftware, auch als App bezeichnet. Letzteres ermöglicht das Bereitstellen eines Hinweises für den Fahrer auch außerhalb des Fahrzeugs. Eine derartige Anzeige bzw. Hinweismeldung 10 ist beispielhaft in Figur 2 gezeigt. Die Anzeige 10 informiert den Fahrer, dass er die Anhängerprüfstellung durchführen sollte.

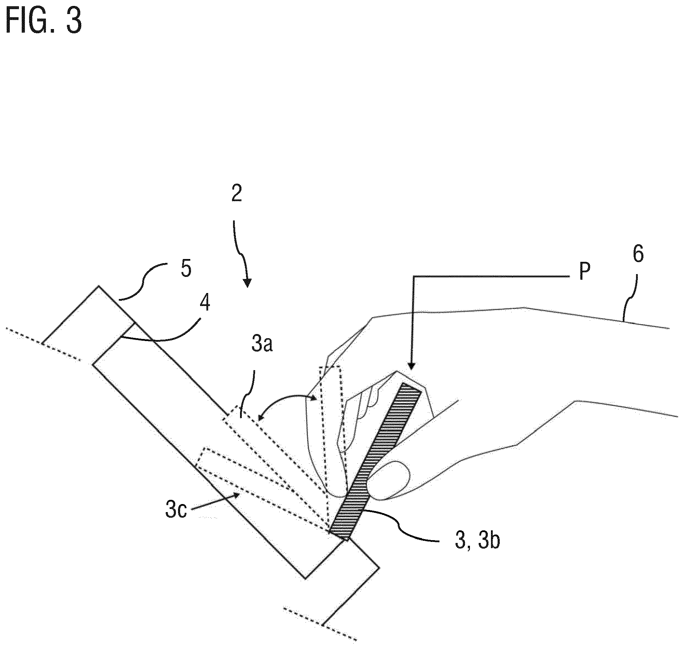

Gemäß einer Ausführungsvariante wird die Anhängerprüfstellung aktiv, wenn der Bedienhebel 3 nach Bedienung der Parkbremse 7 ein zweites Mal gezogen und gehalten wird, was in Figur 3 illustriert ist. Die Zieh- und Haltebetätigung des Bedienhebels 3 in der Stellung 3b ist mit dem Bezugszeichen P bezeichnet. Erkennt die Steuereinrichtung 7 diese zweite Ziehbewegung des Bedienhebels, erzeugt sie ein Steuersignal zur Aktivierung der Anhängerkontrollfunktion. Hierbei werden bei eingelegter Feststellbremse des Zugfahrzeugs die Bremsen des Anhängers gelöst, das Zugfahrzeug wird jedoch weiterhin von der eingelegten Bremse des Zugfahrzeugs gehalten. Dieser Prüfstand kann dem Fahrer durch Anzeige einer entsprechenden Hinweismeldung 11 mitgeteilt werden.

Gemäß einer optionale Ausführungsvariante bekommt der Fahrer zusätzlich nach erfolgter Prüfung eine Mitteilung über das Ergebnis, z. B. als Anzeige 12a, 12b im Display des Kombiinstruments 9 und/oder als akustisches Signal.

Hierbei ist die Steuereinrichtung 7 ferner ausgebildet, ein Prüfergebnis der Anhängerkontrollfunktion automatisch zu ermitteln, insbesondere durch sensorisches Erfassen eines Losrollens und/oder einer Rollbewegung des Zugfahrzeugs bei Durchführung der Anhängerkontrollfunktion. Dies kann beispielsweise mit einem üblichen Raddrehzahlsensor erfolgen, der schon kleinste Bewegungen des Rades in der Anhängerprüfstellung detektieren kann.

Wird dabei keine Rollbewegung festgestellt, kann dem Fahrer eine entsprechende Hinweismeldung 12a angezeigt werden, aus der er entnehmen kann, dass das Fahrzeug sicher abgestellt ist. Wird jedoch eine Rollbewegung festgestellt, kann dem Fahrer eine entsprechende andere Hinweismeldung 12b angezeigt werden, aus der er entnehmen kann, dass als Ergebnis der Anhängerkontrollfunktion der Luftdruck der Bremsen nicht ausreicht, das Fahrzeug an dieser Stelle nicht sicher geparkt werden kann und das Fahrzeug an einer anderen Stelle geparkt werden sollte. Zusätzlich kann dabei ein akustisches Signal 13 ausgegeben werden, das dem Fahrer einen weiteren Hinweis gibt, dass er eingreifen muss. Nach erfolgter Prüfung wird die elektrische Parkbremse wieder automatisch aktiviert.

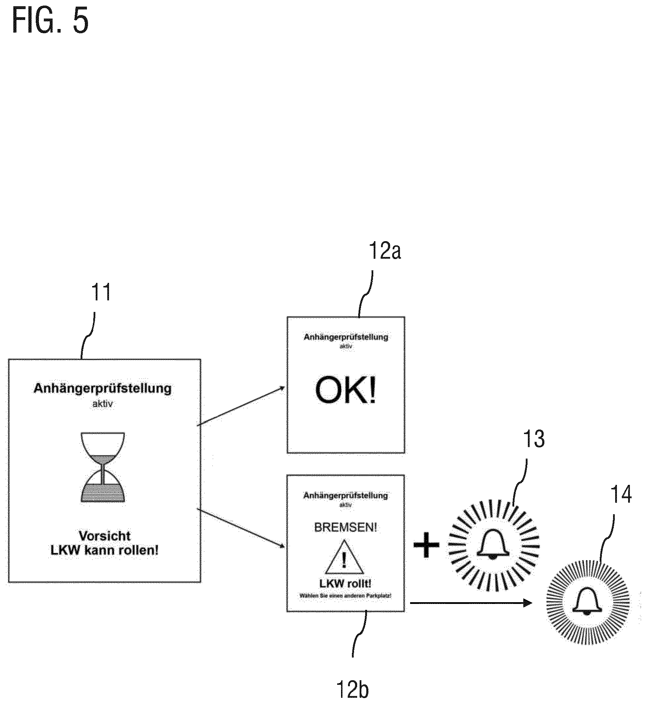

Gemäß einer weiteren Variante, wie in Figur 5 dargestellt, kann erneut ein Warnton 14 und/oder ein Warnhinweis ausgegeben werden, wenn ein Fahrer trotz der ausgegebenen Hinweismeldung 12b , die den Fahrer darauf hingewiesen hat, dass als Ergebnis der Anhängerkontrollfunktion das Fahrzeug umgeparkt werden sollte, das Fahrerhaus verlässt, ohne das Fahrzeug umzuparken.

Gemäß einer weiteren Ausführungsvariante kann auch eine andere Bedienlogik des Bedienhebels 3 zur Aktivierung der Anhängerprüfstellung vorgesehen sein. Zunächst kann die Aktivierung und Deaktivierung der Parkbremse mittels des Bedienhebels 3 wie vorstehend beschrieben erfolgen, nämlich durch ein Ziehen und nachfolgendes Loslassen des Bedienhebels zur Aktivierung der Parkbremse und durch ein Drücken und nachfolgendes Loslassen des Bedienhebels zur Deaktivierung des Bedienhebels. Die Durchführung der Anhängerkontrollfunktion wird gemäß dieser Ausführungsvariante jedoch durch ein erneutes Ziehen, d. h. ein zweites Ziehen, und nachfolgendes Loslassen des Bedienhebels 3 ausgelöst. Der Bedienvorgang ist somit der gleiche wie zur Aktivierung der Parkbremse 8, d. h., das erste Ziehen und Loslassen des Bedienhebels 3 führt zur Aktivierung der Parkbremse, und ein darauf folgendes zweites Ziehen und Loslassen des Bedienhebels 3 führt zur Durchführung der Anhängerkontrollfunktion. Bei dieser Variante wird vorzugsweise eine Rückmeldung auf der Instrumententafel, beispielsweise auf einem Bildschirm des Kombiinstruments, angezeigt, die dem Fahrer anzeigt, ob der Bedienvorgang die Parkbremse aktiviert hat oder die Durchführung der Anhängerkontrollfunktion eingeleitet hat. Bei dieser Ausführungsvariante können alle Meldungen 11,12a, 12b, 13, und 14 ausgegeben werden, wie vorstehend für die erste Bedienvariante beschrieben.

Die elektrische Parkbremse 8 kann als elektropneumatische Federspeicherbremseinrichtung ausgeführt sein, die an sich aus dem Stand der Technik bekannt ist und daher hier nicht näher beschrieben werden muss.

Lediglich beispielsweise kann die elektropneumatische Federspeicherbremseinrichtung eine Feststellbremsventilanordnung und wenigstens einen Federspeicherbremszylinder aufweisen. Der wenigstens eine Federspeicherbremszylinder ist über eine Versorgungsleitung und die Feststellbremsventilanordnung mit einer Druckluftquelle verbindbar, er ist im gelösten Zustand der Feststellbremsvorrichtung mit Druck der Druckluftquelle über die Feststellbremsventilanordnung beaufschlagt und im eingelegten Zustand der Feststellbremsvorrichtung über die Feststellbremsventilanordnung mit einer Drucksenke verbindbar. Die Feststellbremsventilanordnung wird zum Einlegen des gelösten oder eingelegten Zustands elektropneumatisch gesteuert und umfasst Anschlüsse für elektrische Steuerleitungen, die mit der Steuereinrichtung 7 in Signalverbindung stehen, einen ersten Anschluss für eine Versorgungsleitung zur Verbindung der Ventileinrichtung mit der Druckluftquelle, wenigstens einen zweiten Anschluss für eine Druckluftleitung zum Verbinden der elektropneumatischen Ventileinrichtung mit einem oder mehreren Federspeicherbremszylindern. Die Ventileinrichtung ist ausgelegt, im gelösten Zustand der Feststellbremsvorrichtung eine an dem wenigstens einen zweiten Anschluss angeschlossene Druckluftleitung mit Druck der Druckluftquelle zu beaufschlagen und zum Einlegen der Feststellbremsvorrichtung die am wenigstens einen zweiten Anschluss angeschlossene Druckluftleitung zu entlüften. Die elektropneumatisch steuerbare Ventileinrichtung hat einen dritten Anschluss zum Verbinden der elektropneumatischen Ventileinrichtung mit einer Anhängerventileinrichtung, wobei die Ventileinrichtung ausgelegt ist, im gelösten Zustand der Feststellbremsvorrichtung eine an dem wenigstens einen dritten Anschluss angeschlossene Druckluftleitung mit Druck der Druckluftquelle zu beaufschlagen und zum Einlegen der Feststellbremsvorrichtung die am wenigstens einen dritten Anschluss angeschlossene Druckluftleitung zu entlüften. Durch Steuerung des dritten Anschlusses kann somit gezielt das Durchführen der Anhängerkontrollfunktion gesteuert werden.

### Bezugszeichenliste

- 1: Vorrichtung zum Steuern einer elektrischen Parkbremse
- 2: Handbetätigungseinrichtung
- 3: Bedienhebel
- 3a, 3b, 3c: Bedienhebel in verschiedenen Auslenkpositionen
- 4: Hebelschale, z. B. Griffschale
- 5: Instrumententafel
- 6: Nutzer
- 7: Steuerungseinrichtung
- 8: Elektrische Parkbremse
- 9: Kombiinstrument
- 10, 11, 12a, 12b: Anzeigbare Hinweismeldungen
- 13, 14: Akustische Hinweissignale
- 15, 16: Elektrische Signalleitung

## Patentansprüche

1. Verfahren zum Steuern einer elektrischen Parkbremse (8) eines Zugfahrzeugs, wobei das Zugfahrzeug eine Handbetätigungseinrichtung (2) mit einem Bedienelement aufweist, das in eine erste (D1) und in eine zweite (D2) Betätigungsrichtung bewegbar ist, umfassend:
Erfassen von Bedienvorgängen des Bedienelements und Ausgeben von Steuersignalen zur Steuerung der elektrischen Parkbremse (8) in Abhängigkeit von einem erfassten Bedienvorgang, wobei bei Erfassung eines Bedienvorgangs des Bedienelements
a) in die erste Betätigungsrichtung (D1) bei nicht-aktivierter Parkbremse ein Steuerungssignal zur Aktivierung der Parkbremse ausgeben wird,
b) in die zweite Betätigungsrichtung (D2) ein Steuerungssignal zur Deaktivierung der Parkbremse ausgeben wird; und
c) in die erste Betätigungseinrichtung (D1) bei aktivierter Parkbremse ein Steuersignal zur Durchführung einer Anhängerkontrollfunktion ausgeben wird,
wobei das Verfahren **dadurch gekennzeichnet ist,**
**dass** bei Aktivierung der Parkbremse automatisch geprüft wird, ob eine vorbestimmte Anhängerkontrollfunktion-Prüfbedingung erfüllt ist und bei Erfüllung der Anhängerkontrollfunktion-Prüfbedingung eine Rückmeldung an den Fahrer ausgegeben wird, die den Fahrer an die Durchführung der Anhängerkontrollfunktion erinnert.

2. Verfahren nach Anspruch 1, **dadurch gekennzeichnet, dass** das Bedienelement als Bedienhebel (3) ausgeführt ist, der in einer Hebelschale (4) schwenkbar gelagert ist und vorzugsweise an einer Instrumententafel (5) des Zugfahrzeugs angeordnet ist.

3. Verfahren nach Anspruch 2, **dadurch gekennzeichnet, dass** ein Ziehen (A) des Bedienhebels (3) einem Bedienvorgang in die erste Betätigungsrichtung (D1) und ein Drücken des Bedienhebels einem Bedienvorgang in die zweite Betätigungsrichtung (D2) entspricht.

4. Verfahren nach Anspruch 3, **dadurch gekennzeichnet**,
a) dass das Steuerungssignal zur Aktivierung der Parkbremse bei Erfassung eines Ziehens und nachfolgenden Loslassens des Bedienhebels ausgegeben wird; und
b1) dass das Steuersignal zur Durchführung der Anhängerkontrollfunktion bei Erfassung eines Ziehens und Haltens (P) des ausgezogenen Bedienhebels (3) bei aktiviertem Zustand der Parkbremse ausgegeben wird; oder
b2) dass das Steuersignal zur Durchführung der Anhängerkontrollfunktion bei Erfassung eines Ziehens und nachfolgenden Loslassens des Bedienhebels (3) bei aktiviertem Zustand der Parkbremse ausgegeben wird.

5. Verfahren nach Anspruch 1, **dadurch gekennzeichnet, dass** die Rückmeldung eine Hinweismeldung (10), die auf einem Anzeigebildschirm eines Kombiinstruments des Zugfahrzeugs angezeigt wird, ein akustisches Signal und/oder ein haptisches Signal umfasst.

6. Verfahren nach Anspruch 1 oder 5, **dadurch gekennzeichnet, dass** die Anhängerkontrollfunktion-Prüfbedingung erfüllt ist, falls zumindest eine der folgenden Bedingungen vorliegt: Das Zugfahrzeug befindet sich auf einer Steigung oder einer Gefällestrecke, ein Fahrzeuggewicht überschreitet einen vorbestimmten Gewichtsschwellenwert, das Zugfahrzeug ist mit einem Anhänger und/oder Sattelauflieger verbunden.

7. Verfahren nach einem der vorhergehenden Ansprüche, **dadurch gekennzeichnet, dass** das Bedienelement bei Auslenkung in die erste Betätigungsrichtung einen Kraft-Weg-Verlauf mit zunehmender Kraft über den ausgelenkten Weg und mit einem haptisch fühlbaren Druckpunkt aufweist, wobei das Steuerungssignal zur Aktivierung der Parkbremse und das Steuersignal zur Durchführung der Anhängerkontrollfunktion nur ausgegeben werden, wenn der haptisch fühlbare Druckpunkt bei Auslenkung in die erste Betätigungseinrichtung (D1) überschritten ist.

8. Verfahren nach einem der vorhergehenden Ansprüche, **gekennzeichnet durch** ein Ausgeben einer visuellen und/oder akustischen Hinweismeldung (12a, 12b, 13) bei oder nach Durchführung der Anhängerkontrollfunktion, wobei die Hinweismeldung dem Fahrer einen Hinweis darauf gibt, ob er das Zugfahrzeug umparken sollte oder sicher gebremst stehen lassen kann.

9. Verfahren nach einem der vorhergehenden Ansprüche, **gekennzeichnet durch** das Ermitteln eines Prüfergebnisses der Anhängerkontrollfunktion, insbesondere **durch** sensorisches Erfassen eines Losrollens und/oder einer Rollbewegung des Zugfahrzeugs bei Durchführung der Anhängerkontrollfunktion.

10. Verfahren nach einem der vorhergehenden Ansprüche, **dadurch gekennzeichnet, dass** die Parkbremse (8) eine elektropneumatisch betätigbare Feststellbremse, insbesondere eine elektropneumatisch betätigbare Federspeicherbremseinrichtung, ist.

11. Verfahren nach einem der vorhergehenden Ansprüche, **dadurch gekennzeichnet,**
a) **dass** bei Aktivierung der Parkbremse sowohl die Parkbremse des Zugfahrzeugs als auch die Parkbremse eines mit dem Zugfahrzeugs verbundenen Anhängers aktiviert wird; und/oder
b) **dass** zur Durchführung der Anhängerkontrollfunktion die Parkbremse des Zugfahrzeugs aktiviert bleibt und eine Parkbremse des Anhängers temporär deaktiviert wird.

12. Vorrichtung (1) zum Steuern einer elektrischen Parkbremse eines Zugfahrzeugs, umfassend
eine Handbetätigungseinrichtung (2), wobei die Handbetätigungseinrichtung ein Bedienelement aufweist, das in eine erste (D1) und in eine zweite Betätigungsrichtung (D2) bewegbar ist;
eine Steuerungseinrichtung (7), die ausgeführt ist, Bedienvorgänge des Bedienelements (3) zu erfassen und in Abhängigkeit von dem erfassten Bedienvorgang ein Steuersignal (15) zur Steuerung der elektrischen Parkbremse auszugeben, wobei die Steuerungseinrichtung (7) bei Erfassung eines Bedienvorgangs des Bedienelements
a) in die erste Betätigungsrichtung (D1) bei nicht-aktivierter Parkbremse ein Steuerungssignal zur Aktivierung der Parkbremse ausgibt; und
b) in die zweite Betätigungsrichtung (D2) ein Steuerungssignal zur Deaktivierung der Parkbremse ausgibt; und
c) in die erste Betätigungseinrichtung (D1) bei aktivierter Parkbremse ein Steuersignal zur Durchführung einer Anhängerkontrollfunktion ausgibt,
**dadurch gekennzeichnet,**
**dass** die Steuerungseinrichtung (7) ferner ausgeführt ist, bei Aktivierung der Parkbremse zu prüfen, ob eine vorbestimmte Prüfbedingung erfüllt ist, und bei Erfüllung der Prüfbedingung ein Steuersignal zur Ausgabe einer Rückmeldung an den Fahrer zu geben, die den Fahrer an die Durchführung der Anhängerkontrollfunktion erinnert.

13. Vorrichtung nach Anspruch 12, **dadurch gekennzeichnet, dass** die Steuerungseinrichtung (7) zur Durchführung eines Verfahrens gemäß einem der Ansprüche 1 bis 11 ausgebildet ist.

14. Zugfahrzeug, insbesondere derartiges Nutzfahrzeug, umfassend eine Vorrichtung (1) nach Anspruch 12 oder 13.

## Claims

1. A method for controlling an electric parking brake (8) of a tractor unit, wherein the tractor unit has a manual activating installation (2) having an operating element which is movable in a first activation direction (D1) and in a second activation direction (D2), comprising the following steps:
detecting operating procedures of the operating element, and emitting control signals for controlling the electric parking brake (8) as a function of a detected operating procedure, wherein, upon detection of an operating procedure of the operating element
a) in the first activation direction (D1), in the case of a non-activated parking brake, a control signal for activating the parking brake is emitted,
b) in the second activation direction (D2) a control signal for deactivating the parking brake is emitted; and
c) in the first activation direction (D1), in the case of an activated parking brake, a control signal for carrying out a trailer check function is emitted,
wherein the method is **characterized in that**,
when activating the parking brake, it is automatically tested whether a predetermined trailer check function test requirement has been met, and, in the case of the trailer check function test requirement having been met, feedback which reminds the driver to carry out the trailer check function is emitted to the driver.

2. The method according to Claim 1, **characterized in that** the operating element is embodied as an operating lever (3) which is pivotably mounted in a lever socket (4) and is preferably disposed on a dashboard (5) of the tractor unit.

3. The method according to Claim 2, **characterized in that** pulling (A) the operating lever (3) corresponds to an operating procedure in the first activation direction (D1), and pushing the operating lever corresponds to an operating procedure in the second activation direction (D2).

4. The method according to Claim 3, **characterized in that**
a) the control signal for activating the parking brake is emitted upon detecting that the operating lever is being pulled and subsequently released; and b1) the control signal for carrying out the trailer check function is emitted upon detecting that the operating lever (3), in the case of an activated state of the parking brake, is being pulled and held (P) when extracted; or
b2) the control signal for carrying out the trailer check function is emitted upon detecting that the operating lever (3), in the case of an activated state of the parking brake, is being pulled and subsequently released.

5. The method according to Claim 1, **characterized in that** the feedback comprises a instruction (10) which is displayed on a display screen of an instrument cluster of the tractor unit, an acoustic signal, and/or a tactile signal.

6. The method according to Claim 1 or 5, **characterized in that** the trailer check function test requirement is met if at least one of the following conditions prevails: the tractor unit is situated on an uphill gradient or a downhill gradient; a vehicle weight exceeds a predetermined weight threshold value; the tractor unit is connected to a trailer and/or semitrailer.

7. The method according to one of the preceding claims, **characterized in that** the operating element, when deflected in the first activation direction, has a force/deflection profile with force increasing over the deflected path and an appreciable tactile pressure point, wherein the control signal for activating the parking brake and the control signal for carrying out the trailer check function are emitted only when the appreciable tactile pressure point, in a deflection in the first activation direction (D1), is exceeded.

8. The method according to one of the preceding claims, **characterized by** emitting a visual and/or acoustic instruction (12a, 12b, 13) when or upon carrying out the trailer test function, wherein the instruction instructs the driver as to whether the latter should repark the tractor vehicle or may leave the latter parked so as to be reliably braked.

9. The method according to one of the preceding claims, **characterized by** determining a test result of the trailer check function, in particular by detecting by means of sensor a rolling-away movement and/or a rolling movement of the tractor unit when carrying out the trailer check function.

10. The method according to one of the preceding claims, **characterized in that** the parking brake (8) is an electro-pneumatically activatable parking brake, in particular an electro-pneumatically activatable spring-loaded brake installation.

11. The method according to one of the preceding claims, **characterized in that**
a) the parking brake of the tractor unit as well as the parking brake of a trailer connected to the tractor unit are activated upon activation of the parking brake; and/or
b) the parking brake of the tractor unit remains activated and a parking brake of the trailer is temporarily deactivated in order for the trailer check function to be carried out.

12. A device (1) for controlling an electric parking brake of a tractor unit, comprising:
a manual activating installation (2), wherein the manual activating installation has an operating element which is movable in a first activation direction (D1) and in a second activation direction (D2) ;
a control installation (7) which is embodied to detect operating procedures of the operating element (3) and, as a function of the detected operating procedure, to emit a control signal (15) for controlling the electric parking brake, wherein the control installation (7), upon detection of an operating procedure of the operating element
a) in the first activation direction (D1), in the case of a non-activated parking brake, emits a control signal for activating the parking brake; and
b) in the second activation direction (D2) emits a control signal for deactivating the parking brake; and
c) in the first activation direction (D1), in the case of an activated parking brake, emits a control signal for carrying out a trailer check function,
**characterized in that**
the control installation (7), when activating the parking brake, is furthermore embodied to test whether a predetermined test requirement has been met, and, in the case of the test requirement having been met, to emit a control signal to emit feedback to the driver which reminds the driver to carry out the trailer check function.

13. The device according to Claim 12, **characterized in that** the control installation (7) is configured to carry out a method according to one of Claims 1 to 11.

14. A tractor unit, in particular a commercial vehicle of this type, comprising a device (1) according to Claim 12 or 13.

## Revendications

1. Procédé permettant de commander un frein de stationnement électrique (8) d'un véhicule tracteur, le véhicule tracteur présentant un dispositif d'actionnement manuel (2) pourvu d'un élément opérationnel qui peut être déplacé dans une première (D1) et dans une deuxième (D2) direction d'actionnement, comprenant les étapes consistant à :
détecter des opérations de l'élément opérationnel et sortir des signaux de commande pour commander le frein de stationnement électrique (8) en fonction d'une opération détectée, dans lequel, lors de la détection d'une opération de l'élément opérationnel
a) dans la première direction d'actionnement (D1), lorsque le frein de stationnement n'est pas activé, un signal de commande pour l'activation du frein de stationnement est émis,
b) dans la deuxième direction d'actionnement (D2), un signal de commande pour la désactivation du frein de stationnement est émis ; et
c) dans la première direction d'actionnement (D1), lorsque le frein de stationnement est activé, un signal de commande pour l'exécution d'une fonction de contrôle de remorque est émis,
le procédé étant **caractérisé en ce que** lors de l'activation du frein de stationnement, on vérifie automatiquement si une condition de vérification de fonction de contrôle de remorque est remplie, et si la condition de vérification de fonction de contrôle de remorque est remplie, un retour est fourni au conducteur qui rappelle au conducteur d'exécuter la fonction de contrôle de remorque.

2. Procédé selon la revendication 1, **caractérisé en ce que** l'élément opérationnel est réalisé sous la forme d'un levier opérationnel (3) qui est monté pivotant dans une coque de levier (4) et est de préférence disposé sur un tableau de bord (5) du véhicule tracteur.

3. Procédé selon la revendication 2, **caractérisé en ce que** le fait de tirer (A) sur le levier opérationnel (3) correspond à une opération dans la première direction d'actionnement (D1) et le fait d'appuyer sur le levier opérationnel correspond à une opération dans la deuxième direction d'actionnement (D2).

4. Procédé selon la revendication 3, **caractérisé en ce que**
a) le signal de commande pour l'activation du frein de stationnement est émis lorsque le fait de tirer sur le levier opérationnel et de le relâcher ensuite est détecté ; et
b1) le signal de commande pour l'exécution de la fonction de contrôle de remorque est émis lorsque le fait de tirer sur le levier opérationnel (3) sorti et de le maintenir (P) est détecté à l'état activé du frein de stationnement ; ou
b2) le signal de commande pour l'exécution de la fonction de contrôle de remorque est émis lorsque le fait de tirer sur le levier opérationnel (3) et de le relâcher ensuite est détecté à l'état activé du frein de stationnement.

5. Procédé selon la revendication 1, **caractérisé en ce que** le retour comprend un message de notification (10) qui s'affiche sur un écran d'affichage d'un instrument combiné du véhicule tracteur, un signal acoustique et/ou un signal haptique.

6. Procédé selon la revendication 1 ou 5, **caractérisé en ce que** la condition de vérification de fonction de contrôle de remorque est satisfaite si au moins l'une des conditions suivantes existe : le véhicule tracteur se trouve sur une montée ou une descente, un poids du véhicule dépasse une valeur seuil de poids prédéterminée, le véhicule tracteur est relié à une remorque et/ou à une semi-remorque.

7. Procédé selon l'une quelconque des revendications précédentes, **caractérisé en ce que** l'élément opérationnel, lorsqu'il est dévié dans la première direction d'actionnement, présente une courbe force-déplacement avec une force croissante sur le déplacement dévié et avec un point de poussée perceptible de façon haptique, le signal de commande pour l'activation du frein de stationnement et le signal de commande pour l'exécution de la fonction de contrôle de remorque n'étant émis que si le point de poussée perceptible de façon haptique est dépassé lors de la déviation dans la première direction d'actionnement (D1).

8. Procédé selon l'une quelconque des revendications précédentes, **caractérisé par** une émission d'un message de notification visuel et/ou acoustique (12a, 12b, 13) au moment ou après l'exécution de la fonction de contrôle de remorque, le message de notification fournissant au conducteur une indication s'il devrait changer le véhicule tracteur de place ou s'il peut le laisser en place avec un freinage sûr.

9. Procédé selon l'une quelconque des revendications précédentes, **caractérisé par** l'établissement d'un résultat de vérification de la fonction de contrôle de remorque, en particulier par la détection par capteurs d'une mise en mouvement inopinée et/ou d'un déplacement du véhicule tracteur lors de l'exécution de la fonction de contrôle de remorque.

10. Procédé selon l'une quelconque des revendications précédentes, **caractérisé en ce que** le frein de stationnement (8) est un frein d'arrêt à actionnement électropneumatique, en particulier un dispositif de frein à accumulation à actionnement électropneumatique.

11. Procédé selon l'une quelconque des revendications précédentes, **caractérisé en ce que**
a) lors de l'activation du frein de stationnement, à la fois le frein de stationnement du véhicule tracteur et le frein de stationnement d'une remorque reliée au véhicule tracteur sont activés ; et/ou
b) pour l'exécution de la fonction de contrôle de remorque, le frein de stationnement du véhicule tracteur reste activé et un frein de stationnement de la remorque est temporairement désactivé.

12. Dispositif (1) permettant de commander un frein de stationnement électrique d'un véhicule tracteur, comprenant
un dispositif d'actionnement manuel (2), le dispositif d'actionnement manuel présentant un élément opérationnel qui peut être déplacé dans une première (D1) et dans une deuxième (D2) direction d'actionnement ;
un dispositif de commande (7) qui est réalisé pour détecter des opérations de l'élément opérationnel (3) et pour émettre en fonction de l'opération détectée un signal de commande (15) pour la commande du frein de stationnement électrique, dans lequel le dispositif de commande (7), lors de la détection d'une opération de l'élément opérationnel
a) dans la première direction d'actionnement (D1) émet un signal de commande de désactivation du frein de stationnement lorsque le frein de stationnement n'est pas activé ; et
b) dans la deuxième direction d'actionnement (D2) émet un signal de commande de désactivation du frein de stationnement ; et
c) dans la première direction d'actionnement (D1) lorsque le frein de stationnement est activé, émet un signal de commande pour l'exécution d'une fonction de contrôle de remorque,
**caractérisé en ce que** le dispositif de commande (7) est en outre réalisé pour vérifier lors de l'activation du frein de stationnement si une condition de vérification prédéterminée est remplie, et si la condition de vérification est remplie, pour produire un signal de commande pour fournir un retour au conducteur qui rappelle au conducteur d'exécuter la fonction de contrôle de remorque.

13. Dispositif selon la revendication 12, **caractérisé en ce que** le dispositif de commande (7) est réalisé pour exécuter un procédé selon l'une quelconque des revendications 1 à 11.

14. Véhicule tracteur, en particulier véhicule utilitaire de ce type, comprenant un dispositif (1) selon la revendication 12 ou 13.
